# EUROPEAN PATENT SPECIFICATION

(11) **EP 0 482 055 B1**
(45) Date of publication and mention of the grant of the patent: **22.09.1993**
(21) Application number: 90910826.8
(22) Date of filing: 11.07.1990
(51) Int. Cl.: B01J 8/18, C10G 11/18

(54) **METHOD AND APPARATUS FOR CONTACTING SOLID PARTICLES AND FLUID**
REAKTOR FÜR DAS MITEINANDER IN BERÜHRUNG BRINGEN VON FESTTEILCHEN UND FLUID
PROCEDE ET APPAREIL POUR LA MISE EN CONTACT DE PARTICULES SOLIDES ET D'UN FLUIDE

(30) Priority: 12.07.1989 GB 8915984
(43) Date of publication of application: 29.04.1992
(73) Proprietor: EXXON RESEARCH AND ENGINEERING COMPANY, Florham Park, New Jersey 07932-0390 (US)
(72) Inventor: HOLMES, Philip Esso Engineering (Europe) Limited, Leatherhead KT22 8XE (GB)
(74) Representative: Somers, Harold Arnold
(86) International application number: GB9001070
(87) International publication number: WO9100776

(56) References cited:
- EP-A- 0 180 291

## Description

The present invention relates to the contacting of solid particles and fluid. More particularly, but not exclusively, the present invention relates to the contacting of solid particles with a fluid in a reactor, such as the reactor of a catalytic cracker.

The contacting of solid particles and fluids (vapor, gas and/or liquid) is a relatively common operation in chemical engineering practice. It is used in adsorption and desorption processes and in variants thereof wherein thermal and/or catalytic conversions are effected. The time of contact between the solid particles and the fluid is one of a number of operating parameters which is receiving attention since the characteristics of related and/or associated chemical and/or physical change and the size of the contacting equipment is affected by contacting time. Another operating parameter of interest is the efficiency of contacting of the solids with the fluid since this, too, can affect important process and equipment features. In processes involving contacting of fluid with a fluidized bed of the solid particles, the particles adjacent to the lateral containing wall of the bed tend not to be as effective in fluid contacting as those remote from the lateral containing wall and this can lead to excessive solids-fluid contact remote from the wall in order to achieve a desired average degree of solids-fluid contacting. In the instance of fluidized catalytic cracking of a hydrocarbon feed, an underutilization of catalyst particles adjacent to the lateral containing wall and an excessive contacting of hydrocarbon feed and cracked products with catalyst remote from the wall tends to result in insufficient cracking of some feed and over-cracking of other feed so that the overall efficiency of the catalytic cracking process is lower than might otherwise be possible.

It is an object of the present invention to provide improved contacting of solid particles and fluid with a view to ameliorating at least some of the foregoing deficiencies. It is a further object of the invention to provide such improved contacting which can be implemented in a reactor for effecting contacting between solid particles and a fluid, and in particular (but not exclusively) in a reactor forming part of a fluidized catalytic cracking unit.

UK patent specification GB-A-859246 describes and claims apparatus for the fluidized catalytic cracking of hydrocarbons comprising a lower tubular fluidization section, an outwardly diverging conical transition section above the fluidization section having an angle of divergence within the range of 0.5° to 2.5° and a tubular cracking section above the transition section, the total length-to-average diameter ratio of the transition section and the cracking section being within the range of 10:1 to 20:1, first conduit means at the bottom of the fluidization section for injecting a gaseous fluidizing medium therein, second conduit means downstream from the first conduit means, for introducing finely divided solids into the fluidization section, and injection means downstream from the second conduit means, for injecting a liquid feed stock into the fluidization section.

The top diameter of the transition section is preferably from 2 to 3 times the bottom diameter thereof.

The apparatus of GB-A-859246 thus comprises a zone for the contacting of petroleum hydrocarbons (preferably gas oil fractions boiling in the range 650-1050°F (343.3-565.5°C) and having at least 30 vol.% of components boiling above 800°F (426.7°C) with finely divided cracking catalyst, and which zone comprises a first cylindrical vertical riser surmounted by a vertical divergent section connected at its top end to a second vertical cylindrical riser. The diameter of the second cylindrical riser is from 2 to 3 times that of the first cylindrical riser. The hydrocarbon feed is passed into the first cylindrical riser from a plurality of injection nozzles, and the nozzles are depicted as being at an angle of about 45° to the common vertical axis of the risers. The divergent section is located a relatively considerable distance downstream of (i.e., above) the plane at which the feed enters the first cylindrical riser. It is disclosed that a suspension of catalyst in gaseous hydrocarbons is formed in the first riser wherein a conversion reaction is initiated, and during the subsequent upward flow through the divergent section, the flow velocity increases progressively to inhibit retrograde movement of the fluidized catalyst relative to the wall of the divergent section. The vaporized hydrocarbon and suspended catalyst are accelerated to an extent sufficient to provide for a disperse phase suspension of catalyst in vaporized hydrocarbon components at the top of the divergent section.

UK patent specification GB-A-1007248 describes and claims a process for cracking hydrocarbons which comprises passing a suspension of catalyst particles in hydrocarbon vapors as a substantially upflowing stream through a substantially vertically elongated conversion zone, separating spent catalyst particles from cracked hydrocarbon vapors leaving said conversion zone, passing the spent catalyst particles to the upper portion of a substantially vertically elongaged separate stripping zone through sealing means to prevent backflow of vapors from said stripping zone to said conversion zone, passing stripping gas upwardly countercurrent to downflowing catalyst particles in said stripping zone, removing gaseous material overhead from said stripping zone, withdrawing dense fluidized stripped catalyst particles through a standpipe from the bottom portion of said stripping zone and passing them to the lower portion of a regeneration zone, passing regenerating gas upwardly through the catalyst particles to maintain a dense fluidized bed of catalyst particles while regenerating them, withdrawing regenerated catalyst particles from the lower portion of said regeneration zone and passing them to the lower portion of said elongated conversion zone and introducing hydrocarbon oil into the lower portion of said conversion zone for admixture with the introduced regenerated catalyst particles to form said suspension of catalyst particles above mentioned and circulating solids from said stripping zone to said regeneration zone by maintaining a higher pressure of catalyst particles in the bottom portion of said stripping zone than in the lower portion of said regeneration zone. In the illustrated embodiment, the substantially vertically elongated conversion zone comprises a relatively long, hollow cylindrical reactor, having the form of a relatively wide pipe, which surmounts a narrower, relatively short tube described as the injection section. Hot regenerated catalyst particles are received at the bottom region of the injection section, and they are entrained upwardly into the reactor by steam which is injected at the base of the injection section. Feed which is to be cracked is injected into the bottom portion of the reactor for admixture with the upflowing suspension of catalyst particles in steam from the injection section. The oil feed is atomized and vaporized and mixed with the catalyst particles so that the suspension of catalyst particles in oil vapor passes upwardly in the reactor at a velocity between about 3 and 12 m/s. At spaced elevations along the interior of the reactor, there are provided venturi shaped contacting devices. The venturi contacting devices ensure co-current contacting between the solid and vaporous materials, and in particular, the mainly solids containing stream which passes downwardly along the walls and the main stream or suspension of solid catalyst passing up through the centre of the reactor. There is no disclosure or suggestion in GB-A-1007248 of contacting droplets of oil feed and catalyst particles in any of the venturis or in any particular region of any of them.

In European specification EP-A1-0180291 there is disclosed an operation of a fluidized catalytic cracking unit, in which a hydrocarbons feed is injected into a venturi near the base of the unit's riser and a first increment of a hot regenerated catalyst is mixed in the venturi with feed droplets. The purpose thereof is to vaporize feed droplets, but not crack them. The thus formed stream of catalyst and vaporized oil is led to a second zone and mixed therein with a second increment of hot catalyst. The hydrocarbons feed is thereafter cracked in the unit's riser.

The present invention provides, in one aspect, a catalytic cracking process comprising contacting a hydrocarbon feed with particles of hydrocarbon cracking catalyst in a cracking reactor under catalytic cracking conditions, separately recovering from the reactor cracked hydrocarbon products and spent catalyst, heating and regenerating recovered spent catalyst, and circulating heated and regenerated catalyst into contact with further quantities of feed, wherein substantially all the said circulated regenerated catalyst is passed to the inlet of a venturi having a convergent entrance portion, a throat and a divergent exit portion, passing the feed in the form of liquid droplets into the throat and/or exit portion of the venturi, vaporising liquid droplets of feed in the throat and/or exit portion by heat exchange with hot regenerated catalyst particles, recovering a dispersion of catalyst particles in feed vapour in a pipe connected to the exit portion of the venturi, and catalytically cracking vapour phase feed at a region of the venturi and pipe substantially no further upstream (relative to the direction or sense of the flow of feed and catalyst particles through the venturi) than the throat of the venturi.

Preferably, carbonaceous deposits on recovered spent catalyst particles are at least partially removed by contacting the recovered particles in a regeneration zone with an oxygen-containing gas in an elevated deposit-removing temperature.

Preferably, particles are accelerated through the entrance portion of the venturi by the energy of the fluid and are substantially thoroughly mixed with fluid vapor in the throat and/or exit portion of the venturi.

In another aspect, the invention provides a fluidized catalytic cracking unit (FCCU) comprising a reactor wherein a hydrocarbon feed is contacted with particles of hot regenerated cracking catalyst under catalytic cracking conditions, separating means for separating cracked feed products from spent catalyst particles, a regenerator for regenerating and heating spent catalyst particles, and conduit means for returning hot regenerated catalyst particles from the regenerator to the reactor, wherein the reactor comprises means for contacting the hot regenerated catalyst returned from the regenerator with the hydrocarbon feed, the said means comprising a venturi having a convergent entrance portion, a throat and a divergent exit portion, an inlet tube for conducting substantially all the said hot regenerated catalyst from the said conduit means into the entrance portion of the venturi, at least one nozzle for discharging liquid droplets of hydrocarbon feed into the throat and/or exit portion of the venturi whereby liquid droplets are vaporised in the throat and/or exit portion by heat exchange with the hot regenerated catalyst particles from the conduit means thereby forming a dispersion of catalyst particles in vaporised feed, and a pipe for conducting the said dispersion from the exit portion of the venturi to a dispersion-receiving and/or recovery zone.

There may be provided a stripping zone operative for stripping strippable hydrocarbon material from spent catalyst recovered from the separating means.

The apparatus may comprise a regeneration zone connected for receiving particles from the separating means and operative for heating the particles received therein. Preferably, the said inlet tube is connected to the regeneration zone for receiving and conducting heated particles therefrom.

Preferably, the regeneration zone comprises means for contacting particles received from the separating means with an oxygen-containing gas to remove combustible deposits from the particles in an exothermic oxidation reaction which heats the particles.

The venturi may be formed by a venturi-shaped refractory mass, optionally reinforced, between the inlet tube and the said pipe.

Preferably, the said nozzle is a hydrocarbon feed discharge nozzle having its discharge port located and spaced at a selected distance from the throat of the venturi so that hydrocarbon feed discharged therefrom is in the form of oil droplets at the throat and/or exit portion of the venturi.

Preferably, the length of the said pipe is selected to give a particles-vapor contacting time of less than 15 seconds.

The present invention also provides a catalytic cracking unit comprising apparatus as described.

The nozzles may be arranged for passing fluid into the venturi with a component of velocity in the direction of flow of solids and vapor.

In some embodiments, the direction of flow of solids and vapor through the venturi will be upwards, and in other embodiments downwards.

The nozzles may be arranged relative to the pipe for injecting fluid into the pipe substantially radially with respect to the central axis of the venturi. Alternatively, the or each nozzle may be arranged relative to the venturi for passing fluid thereinto at an angle exceeding 0° relative to a radius from the central axis of the venturi. In this type of embodiment, each nozzle is preferably arranged to pass fluid into the venturi with at least a tangential component of velocity.

The invention will now be further described with reference to some non-limitative embodiments thereof and with reference to the accompanying diagrammatic drawings in which:-
Figure 1 is a diagram (not to scale) of the principal features of a known fluidized catalytic cracking unit ("FCCU");
Figure 2 is a diagrammatic cross-section of a part of the FCCU of Figure 1, but to a larger scale;
Figure 3 is a diagrammatic cross-section of the same part as in Figure 2, but showing instead one embodiment according to the invention;
Figure 4 is a diagrammatic cross-section similar to Figure 2, but showing instead another embodiment according to the invention;
Figure 5 is a diagrammatic cross-section of another embodiment or variant of the part shown in Figure 2; and
Figure 6 is a diagrammatic cross-section of yet another embodiment or variant of the part shown in Figure 2.

In the drawings, only those features which are necessary for an understanding of the invention are shown or depicted.

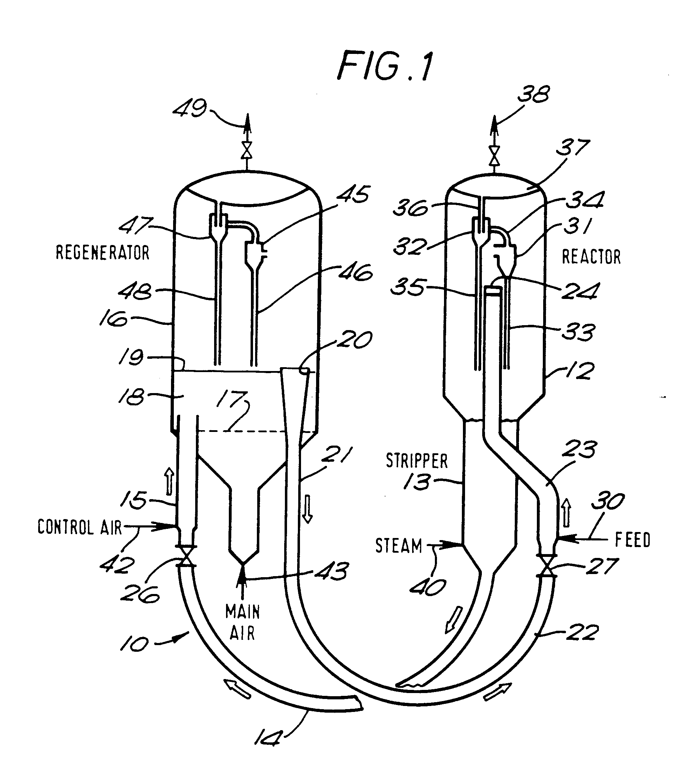

Reference is first made to the FCCU 10 of Figure 1 which comprises a reactor vessel 12 surmounting a stripper 13, the conical bottom of which communicates via a U-bend pipe 14 with an upwardly-extending riser 15, the top of which is located within a regenerator vessel 16 at a level above the conical bottom thereof and slightly above a perforated grid 17 which extends across the top of the conical bottom. The regenerator 16 contains fluidized particles of cracking catalyst in a bed 18 which extends up to a top level 19 in the regenerator. Catalyst which tends to rise above level 19 overflows into the top region 20 of a downcomer 21 which is connected to one end of a U-bend pipe 22. The other end of the pipe 22 is connected to a riser 23 which extends substantially vertically and generally upwardly to a termination device 24 at its top end to define the upper limit of the riser 23. Each U-bend pipe 14 and 22 has a respective closure valve 26, 27 for emergency and maintenance closing of the flow passages therethrough.

The U-bend pipes 14 and 22 are each shown in Figure 1 as substantially symmetrical structures. However, those knowledgeable and/or skilled in the art will know or appreciate that one or both U-bend pipes 14 and 22 may be asymmetrical. For example, in one well-known variant of the symmetrical U-bend pipe 22, the riser pipe 23 may extend vertically downwards further than shown in Figure 1, and the pipe 22 may be inclined downwards from the downcomer 21 so that the junction of the riser pipe 23 and the pipe 22 has a form approximating to the letter 'J' or the form of a hockey club. As indicated above, this and other variants are known or will be appreciated by those knowledgeable and/or skilled in the art.

In broad terms, the operation of the FCCU 10 proceeds as follows: a hydrocarbon feed, usually consisting of, or containing, fractions boiling in the gas oil range and higher, is passed into a lower part of the riser 23 from a feed line 30. Usually, the feed from line 30 is introduced into the riser 23 via a plurality of injectors (not shown) arranged equiangularly around riser 23. Hot regenerated catalyst particles passing upwardly through the riser 23 mix with, and heat, the injected feed in the riser 23 at the level of the feeds injectors and higher causing selective catalytic conversion of the feed to cracked products, which include vapor-phase cracked products, and carbonaceous and tarry cracked products which deposit on, and within the pores of, the catalyst particles. The feed is usually atomized to dispersed liquid droplets by steam which is passed into the injectors 23 from a steam manifold (not shown). The mixture of catalyst particles and vapor-phase products enters the reactor vessel 12 from the riser 23 via horizontal apertures (not shown) in the termination device 24. This promotes the separation of solids from vapors in the reactor vessel 12. Vapors together with entrained solids pass into a cyclone separation system which is herein shown to comprise two cyclones 31 and 32. The cyclone 31 provides primary separation of vapors and entrained solids, a major part of the latter being returned to the base of vessel 12 via a dipleg 33. The solids-depleted vapors from primary cyclone 31 are conducted via pipe 34 to the secondary cyclone 32 for further solids- separation, the separated solids being returned to the base of vessel 12 via dipleg 35, and cracked vapor products are recovered from cyclone 32 via conduit 36, plenum 37 and product line 38.

The catalyst particles from riser 23, together with separated solids from the cyclones 31 and 32, pass downwardly into the top of the stripper 13 wherein they are contacted by upwardly-rising steam injected from line 40 near the base thereof. The steam strips from the particles adsorbed and occluded strippable hydrocarbons, and these, together with the stripping steam, are recovered with the cracked products in product line 38.

Stripped catalyst particles bearing carbonaceous deposits circulate from the conical base of stripper 13 via the U-bend pipe 14 and the riser 15 into the bed 18 of catalyst particles contained in the regenerator vessel. The circulation of particles via the pipe 14 is promoted by control air which is passed into a lower region of the riser 15 from line 42.

The catalyst particles in the bed 18 are fluidized by air passed into the base of regenerator vessel 16 from line 43. The air oxidatively removes carbonaceous deposits from the particles and the heat of reaction (e.g., combustion and/or part-combustion) raises the temperature of the particles in the bed to temperatures suitable for cracking the feed hydrocarbons. Hot regenerated catalyst overflows the top region 20 of the downcomer 21 and passes via the downcomer 21 into the U-bend pipe 22 for contact with further quantities of feed supplied from line 30.

The spent air passing upwardly from the top level 19 of the bed 18 in regenerator vessel 16 enters a primary cyclone 45 for separation of entrained particles, the latter being returned to the bed 18 via a dipleg 46. A further stage of solids-separation is effected by secondary cyclone 47 which receives the solids-depleted gas from the primary cyclone 45, the separated solids being returned to the bed 18 via a dipleg 48. Spent air is recovered from the top of the regenerator vessel conduct 49.

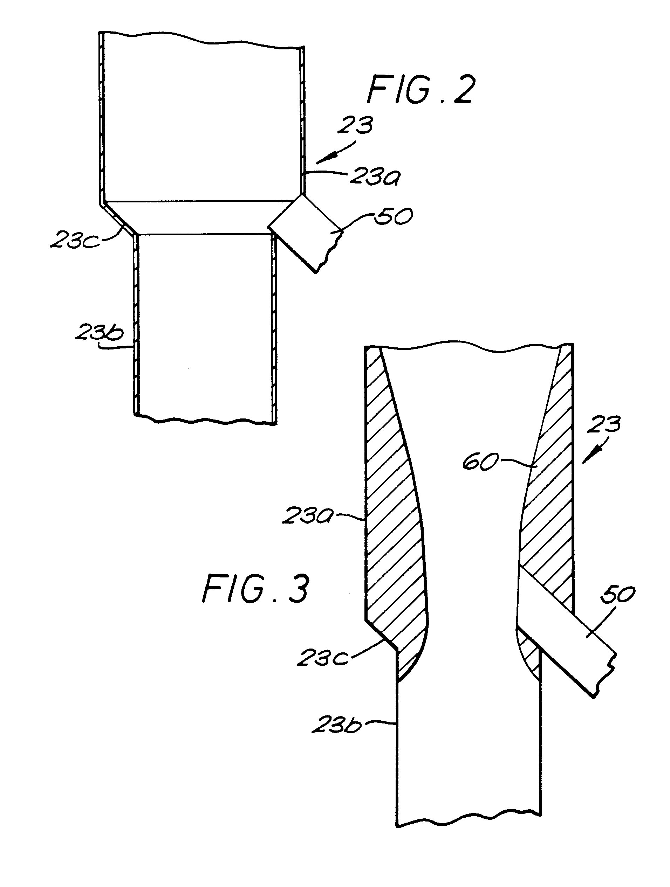

Reference is now made to Figure 2 of the drawings which depicts, diagrammatically and to a larger scale, the principal features of the region of the riser 23 where the feed is injected from line 30.

The riser 23 has an upper part 23a which surmounts a lower part 23b of smaller horizontal cross-sectional flow area. An upwardly-divergent connecting part 23c connects the top of the lower part 23b with the bottom of the upper part 23a. A plurality of feed injection nozzles is symmetrically arranged around the riser 23 to inject feed in the form of steam-atomized liquid hydrocarbon droplets from the feed line 30 (Fig. 1) into the riser. The nozzles receive feed via a manifold (not shown). In Figure 2, a single one of the injectors is shown for the sake of simplicity. The injector 50 is connected to the connecting part 23c of riser 23 with its axis in the radial plane of the riser 23, and it is inclined upwardly so that feed passes into the riser with an upward component of velocity. The contacting of the feed with hot regenerated catalyst causes conversion of the feed to vapors including cracked products, and the increased volume due to vapor phase components tends to accelerate the catalyst upwardly.

It has been observed that the densities and velocities of the vapors and catalyst particles in the riser 23 may be considerably non-uniform. As a result, in some regions catalyst particles may have relatively excessive contact with feed and vapor products and in other regions relatively insufficient contact. This gives a wide range of reaction conditions which, in the extremes, cause undesirable thermal cracking, excessive catalytic cracking and simple vaporization of feed. Dry gas yield (i.e., C₂-hydrocarbons and hydrogen) and the amount of carbonaceous deposit ("coke") on the catalyst particles (coke yield ) are thereby increased at the expense of the more valuable lighter liquid products.

Reference is now made to Figure 3 of the drawings which depicts the same region of a riser 23 as is shown in Figure 2, but constructed in accordance with the invention.

In the arrangement shown in Figure 3, ports which are equivalent to those in Figure 2 are given the same reference numerals.

It will be seen that the lower part 23b of the riser 23, immediately below the feed injection nozzles 50, is formed with a cross-section which reduces progressively and smoothly in an upward direction and then increases progressively and smoothly in the upward direction within the upper port 23a of the riser 23 so as to form a venturi-like arrangement having the narrowest part or throat in substantially the same horizontal plane as the injection nozzle. In the embodiment shown, the venturi-like arrangement is formed by providing the lower part 23b, the connecting part 23c and the upper part 23a of the riser with a lining 60 which has the desired internal shape and is adequately resistant to the conditions of operation for an economical life. Alternatively, the wall of the riser 23 itself may be formed to provide the venturi-like arrangement.

The nozzles 50 (of which only one is shown in Figure 3) are located and arranged to spray the hydrocarbon oil feed in the form of oil droplets into the throat and exit portion of the venturi so that the principal initial region of contact of oil droplets with hot catalyst particles is substantially no further upstream (relative to the direction of movement of the catalyst particles and vapor through the venturi) than the throat of the venturi. As a result of this arrangement, the energy of the feed is shared with the catalyst particles in the venturi causing rapid acceleration of the catalyst particles to velocities approximating to the velocity of the feed in the venturi, and the contacting of oil droplets with catalyst particles in the venturi throat and downstream thereof results in vaporization of oil droplets substantially starting at the throat or downstream thereof in the venturi. The vaporization of oil droplets results in the production of large volumes of oil vapor in the venturi principally in the throat thereof and/or downstream. Catalyst particles are substantially uniformly dispersed in the oil vapor by the high degree of turbulence substantailly commencing in the throat and/or divergent section of the venturi. Thus, the catalyst/vapor mixture leaving the downstream end of the venturi into the part 23a of the riser is highly turbulent and of substantially uniform composition in radial planes of the riser, and the catalyst particles move upwardly in the riser part 23a with velocities approximating to the local velocities of vapor therein.

The venturi-like arrangement promotes relatively uniform acceleration of the catalyst particles by more efficient transfer of energy from the liquid hydrocarbon feed sprayed as droplets into the more slowly moving catalyst phase. The resulting turbulence in the divergent section enhances catalyst/oil contacting and provides for more uniform vaporisation. Hence, catalyst particles at the top of the upper part 23a of the riser 23 have a higher upward velocity (i.e., reduced slip relative to the entraining fluid) with a relatively flatter velocity profile across the riser 23, and are relatively more uniformly mixed with the vaporized feed than is the case in the riser depicted in Figure 2 when operating under the same conditions (of e.g. feedrate, catalyst rate, temperature and pressure). As a result, vaporized feed hydrocarbons are more uniformly cracked in the more desirable and controlled catalytic manner as catalyst and vapor continue their transit up the riser into the reactor and its separation devices. Accordingly, the production of dry gas (C₂- hydrocarbons and hydrogen) and the amount of carbonaceous deposit (coke yield) on the catalyst are reduced and there is a corresponding increase in the more valuable lighter liquid products relative to those obtainable in the Figure 2 embodiment operating at the same conditions.

In Figure 3, the feed injector 50 is depicted as having its axis in a radial plane of the riser 23, in the same manner as in Figure 2. In a variant (not shown) of the Figure 3 arrangement, the feed injectors may each have their axes turned in the same sense so as to intersect the respective radial planes of the riser 23 at an angle exceeding 0° (e.g. in the range 30 to 85°), whereby the injected feed and the vapors resulting therefrom have a tangential component of velocity. The vapors tend to spiral up the venturi-like region of the upper part 23a of the riser thereby tending to reduce the thickness of the low-velocity vapor region adjoining the internal wall of the upper part 23a of the riser so that the tendency of catalyst particles to form a dense, slow-moving film or sheath over the internal wall of the upper part 23a of the riser 23 is reduced.

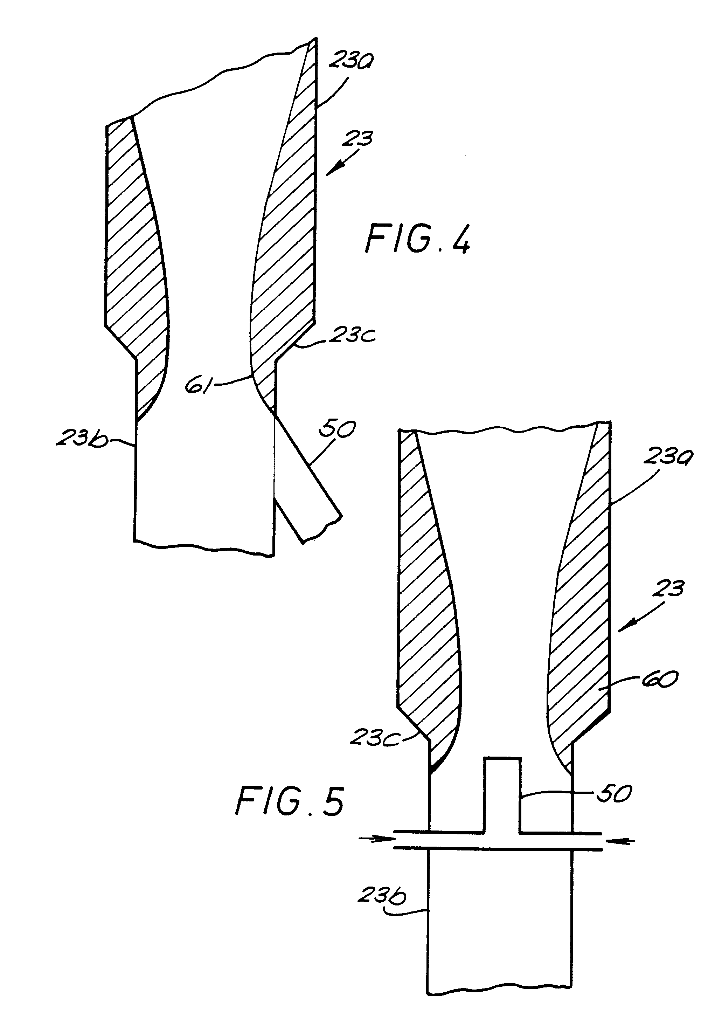

Reference is now made to the embodiment of Figure 4 wherein the smoothly or progressively converging and diverging venturi-like arrangement 61 in the riser 23 is similar to that depicted in Figure 3; however, in Figure 4, the nozzles 50 inject feed upstream of the arrangement 61 in the lower part 23b of the riser 23, rather than into the narrowest part or throat thereof. This disposition provides similar benefits to those of the Figure 3 embodiment but provides for vaporisation of the liquid hydrocarbon feed droplets being substantially coincident with the region of the entrance into the diverging section. This offers benefits when processing very heavy feeds of high boiling point which do not vaporise so readily and require a longer mixing length in the riser.

In a variant (not shown) of the Figure 4 embodiment, the feed injectors 50 are arranged so that their respective axes intersect corresponding radial planes of the riser 23 at an angle exceeding zero (e.g., in the range 30 to 85°) so that the injected feed has a tangential component of velocity.

Reference is now made to the embodiment of Figure 5 which is similar to the embodiment of Figure 4 except that the feed is injected in an axial direction up the riser 23 from one or more central nozzles 50 (only one being shown in Fig. 5), the discharge tip of which is in a horizontal plane slightly above the horizontal plane of the bottom end of the venturi arrangement in the riser. The feed is passed into the riser as atomized droplets of liquid feed under the action of steam (in the known manner), and the relative locations of the tip of the nozzle(s) 50 and the venturi are such that oil feed droplets substantially commence vaporization no further upstream than the throat or the start of the divergent section of the venturi. As a result, substantially unvaporized droplets share their energy with catalyst particles entering the venturi thereby accelerating them into the venturi, and the vaporization of oil droplets in the throat and/or divergent section thereof results in a high degree of turbulence and a good dispersion of catalyst particles in oil vapor.

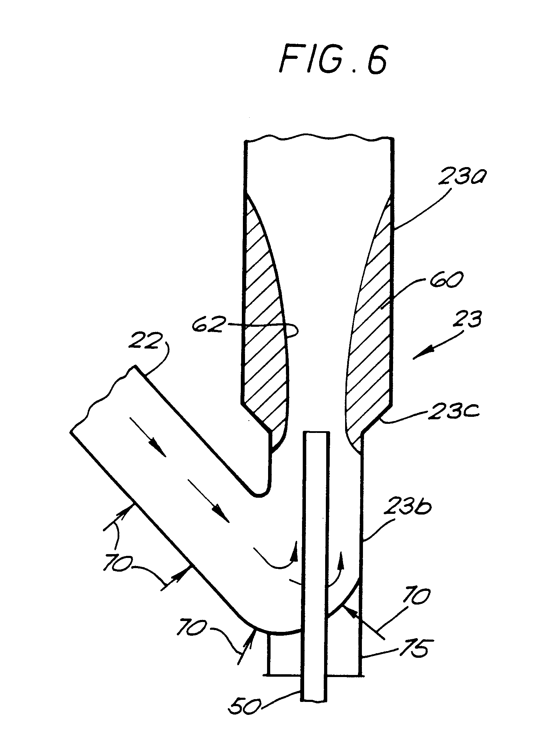

Reference is now made to the embodiment of Figure 6. In this embodiment, the regenerated catalyst return pipe 22 is not in the form of a substantially symmetrical 'U' as depicted in Figure 1, but slopes downwardly from the lower end of the downcomer 21 (Figure 1) to its junction with the lower end of riser 23. Junctions of this type are well-known and are designated 'J-bends' because of their resemblance to the letter J.

The lower part 23b of the riser is connected to the lower end of the pipe 22 so as to provide a relatively smooth change of direction for catalyst particles passing from the pipe 22 into the riser 23. The wider upper part 23a of the riser is connected to the top end of the lower part 23a. As in the embodiments of Figures 3, 4 and 5, a short divergent transition section 23c provides the mechanical connection between the lower and upper parts 23b, 23a of the riser 23. A venturi-like arrangement is formed internally in the riser 23 by a refractory mass 60, which is so formed that the internal diameter of the interior of the riser 23 is progressively reduced in an upward direction when passing from the lower part 23b to the upper part 23a until the throat 62 of the venturi is reached (just above the transition section 23c, as depicted in Figure 6) and thereafter progressively increased until the internal diameter is equal to that of the upper part 23a of the riser 23 at the top of the refractory mass 60.

A vertical feed injection nozzle 50 extends upwardly through the bottom of the J-bend and terminates slightly above the lower end of the venturi-like arrangement, and below the throat 62 thereof.

During operation, hot regenerated catalyst particles pass down the pipe 22 from the regenerator bed 18 (Figure 1) and the downcomer 21 (Figure 1), and then circulate upwardly into the riser 23, as indicated by the arrows. The hot catalyst particles are accelerated upwardly into the throat of the venturi by sharing the energy of hydrocarbon feed droplets discharged from the tip of the injector 50 within the convergent part of the venturi. The resulting efficient energy transfer between the hydrocarbon droplets and catalyst particles causes the latter to be accelerated to velocities approximating those of the hydrocarbon droplets entering the throat of the venturi. The discharge tip of the injector 50 is so located relative to the venturi that vaporization of oil droplets discharged from the injector tip substantially commences no further upstream in the venturi than the throat thereof due to heat transfer from catalyst particles at that region. As a result, a relatively great increase in vapor phase material substantially commences no further upstream than the throat of the venturi, causing relatively high turbulence which causes good catalyst/oil vapor mixing no further upstream than the throat of the venturi. The catalyst/oil vapor mixing leaving the downstream end of the venturi is, as a result, relatively uniform in radial planes of the riser 23, and the catalyst particles pass up the riser with velocities approximating to the local velocities of hydrocarbon vapors.

In order to prevent catalyst particles accumulating and packing in the J-bend of the Figure 6 embodiment, an "aerating" or fluidizing gas or vapour (preferably steam) is passed into the bottom of the pipe 22 (and of the J-bend connection to the riser 23) from pipes 70. The J-bend is supported by suitable structural parts, some of which are depicted as item 75 in Figure 6.

Although the bulk density of catalyst particles can be reduced and acceleration of catalyst particles to velocities approximating those of the hydrocarbon feed vapors can be achieved by injecting gas or vapor (such as steam) into the riser 23 (e. g., a riser 23 of known type, such as that depicted in Figure 2), the gas or vapor would take up some of the capacity of the reactor 12 and the product recovery and separation equipment (not shown) associated therewith, thereby reducing the maximum feed throughput capacity of the FCCU. The reactor of the present invention avoids this drawback.

Those skilled in the art will appreciate or know the types of feed injection nozzles most appropriate for optimum operation of the apparatus of the invention. For example, in the embodiment of Figure 3, the preferred type of nozzle(s) would be those which discharge oil droplets in the form of a fan-shaped planar spray, e.g., which subtends an arc on the opposite wall of the venturi. In the embodiments of Figures 4, 5 and 6, it would be preferred to employ nozzles of the types which discharge a solid cone of oil droplets.

In the described embodiments, the lower part 23b of the riser 23 is illustrated as narrower than the upper part 23a. However, the invention may be applied to embodiments where the upper part 23b has substantially the same diameter as the lower part 23a, or even where it has a smaller diameter.

It will be appreciated that the reactor of the invention can be applied to existing FCCUs in addition to new FCCUs.

It will also be appreciated that although specific embodiments described and illustrated herein relate to reactors of the riser type wherein the catalyst particles and entraining fluids pass upwardly therethrough, it is within the ambit of the invention to employ risers wherein the catalyst particles and entraining fluids pass downwardly so that advantageous use can be made of the gravitational acceleration of the catalyst particles downwardly through the riser to reduce residence and contact times therein. In essence, such downwardly-acting risers are similar to those described and illustrated but are inverted, with whatever adaption is necessary and/or desirable for their effective operational functioning, as will be apparent to those skilled in the art.

A feature or combination of features described herein in relation to one embodiment of the invention can be used in connection with another embodiment without departing from the scope of the invention as defined in the claims which follow:

## Claims

1. A catalytic cracking process comprising contacting a hydrocarbon feed with particles of hydrocarbon cracking catalyst in a cracking reactor under catalytic cracking conditions, separately recovering from the reactor cracked hydrocarbon products and spent catalyst, heating and regenerating recovered spent catalyst, and circulating heated and regenerated catalyst into contact with further quantities of feed, wherein substantially all the said circulated regenerated catalyst is passed to the inlet of a venturi having a convergent entrance portion, a throat and a divergent exit portion, passing the feed in the form of liquid droplets into the throat and/or exit portion of the venturi, vaporising liquid droplets of feed in the throat and/or exit portion by heat exchange with hot regenerated catalyst particles, recovering a dispersion of catalyst particles in feed vapour in a pipe connected to the exit portion of the venturi, and catalytically cracking vapour phase feed at a region of the venturi and pipe substantially no further upstream (relative to the direction or sense of the flow of feed and catalyst particles through the venturi) than the throat of the venturi.

2. A process as in claim 1 comprising the step of stripping strippable hydrocarbon material from spent catalyst recovered from the reactor.

3. A process as in claim 1 or claim 2 wherein carbonaceous deposits on spent catalyst particles recovered from the reactor are at least partially removed by contacting the recovered spent catalyst particles with an oxygen- containing gas in an elevated deposit-removing temperature in the regenerator.

4. A process as in any one of claims 1 to 3 wherein catalyst particles are accelerated through the entrance portion of the venturi by the energy of the hydrocarbon feed and are substantially thoroughly mixed with fluid vapour in the throat and/or exit portion of the venturi.

5. A process as in any one of claims 1 to 4 wherein the venturi and the said pipe constitute at least part of the reactor.

6. A fluidised catalytic cracking unit (FCCU) comprising a reactor wherein a hydrocarbon feed is contacted with particles of hot regenerated cracking catalyst under catalytic cracking conditions, separating means for separating cracked feed products from spent catalyst particles, a regenerator for regenerating and heating spent catalyst particles, and conduit means for returning hot regenerated catalyst particles from the regenerator to the reactor, wherein the reactor comprises means for contacting the hot regenerated catalyst returned from the regenerator with the hydrocarbon feed, the said means comprising a venturi having a convergent entrance portion, a throat and a divergent exit portion, an inlet tube for conducting substantially all the said hot regenerated catalyst from the said conduit means into the entrance portion of the venturi, at least one nozzle for discharging liquid droplets of hydrocarbon feed into the throat and/or exit portion of the venturi whereby liquid droplets are vaporised in the throat and/or exit portion by heat exchange with the hot regenerated catalyst particles from the conduit means thereby forming a dispersion of catalyst particles in vaporised feed, and a pipe for conducting the said dispersion from the exit portion of the venturi to a dispersion-receiving and/or recovery zone.

7. Apparatus as in claim 6 comprising a stripping zone operative for stripping strippable hydrocarbon material from spent catalyst recovered from the separating means.

8. Apparatus as in claim 6 or claim 7 wherein said conduit means is connected to the regeneration zone for receiving and conducting heated particles therefrom.

9. Apparatus as in any one of claims 6 to 8 wherein the regeneration zone comprises means for contacting particles received from the separating means with an oxygen-containing gas to remove combustible deposits from the particles in an exothermic oxidation reaction which heats the particles.

10. Apparatus as in any one of claims 6 to 9 wherein the venturi is formed by a venturi-shaped refractory mass, optionally reinforced, between the inlet tube and the said pipe.

11. Apparatus as in any one of claims 6 to 10 wherein the said nozzle is a hydrocarbon feed discharge nozzle having its discharge port located and spaced at a selected distance from the throat of the venturi so that hydrocarbon feed discharged therefrom is in the form of oil droplets at the throat and/or exit portion of the venturi.

12. Apparatus as in any one of claims 6 to 11 wherein the length of the said pipe is selected to give a particles-vapour contacting time of less than 15 seconds.

## Patentansprüche

1. Katalytisches Spaltverfahren, das das in Kontakt Bringen einer Kohlenwasserstoffcharge mit Teilchen eines Kohlenwasserstoffe spaltenden Katalysators in einem Spaltreaktor unter katalytischen Spaltbedingungen, das separate Rückgewinnen von gekrackten Kohlenwasserstoff-Produkten und verbrauchtem Katalysator aus dem Reaktor, das Erhitzen und Regenerieren des zurückgewonnenen verbrauchten Katalysators und das Zirkulieren des erhitzten und regenerierten Katalysators in Kontakt mit weiteren Chargenmengen, wobei im wesentlichen die Gesamtheit des zirkulierten regenerierten Katalysators in den Eintritt eines Venturirohrs geleitet wird, das einen konvergierenden Eintrittsteil, eine Einschnürung und einen divergierenden Austrittsteil hat, das Leiten der Charge in der Form flüssiger Tröpfchen in die Einschnürung und/oder den Austrittsteil des Venturirohrs, das Verdampfen der flüssigen Chargentröpfchen in der Einschnürung und/oder dem Austrittsteil durch Wärmeaustausch mit den heißen regenerierten Katalysatorteilchen, das Rückgewinnen einer Dispersion von Katalysatorteilchen im Chargendampf in einem Rohr, das mit dem Austrittsteil des Venturirohrs verbunden ist und das katalytische Spalten der Dampfphasencharge in einem Bereich des Venturirohrs und des Rohrs umfaßt, der im wesentlichen nicht weiter stromauf (bezogen auf die Richtung oder den Sinn der Strömung von Charge und Katalysatorteilchen durch das Venturirohr) als die Einschürung des Venturirohrs liegt.

2. Verfahren nach Anspruch 1, welches den Schritt des Desorbierens von desorbierbarem Material von verbrauchtem Katalysator umfaßt, der aus dem Reaktor zurückgewonnen wird.

3. Verfahren nach Anspruch 1 oder 2, bei welchem kohlenstoffhaltige Ablagerungen auf verbrauchten Katalysatorteilchen, die aus dem Reaktor zurückgewonnen werden, zumindest teilweise dadurch entfernt werden, daß man sie mit einem Sauerstoff enthaltenden Gas in einer erhöhten die Ablagerung entfernenden Temperatur in dem Regenerator in Kontakt bringt.

4. Verfahren nach irgendeinem der Ansprüche 1 bis 3, bei welchem Katalysatorteilchen durch den Eintrittsteil des Venturirohrs durch die Energie der Kohlenwasserstoffcharge beschleunigt und im wesentlichen in der Einschnürung und/oder dem Austrittsteil des Venturirohrs mit Flüssigkeitsdampf gründlich gemischt werden.

5. Verfahren nach irgendeinem der Ansprüche 1 bis 4, bei welchem das Venturirohr und das Rohr zumindest einen Teil des Reaktors bilden.

6. Wirbelbett-Spalteinheit (FCCU), welche einen Reaktor, in welchem eine Kohlenwasserstoffcharge mit Teilchen von heißem regeneriertem Katalysator unter katalytischen Spaltbedingungen in Kontakt gebracht wird, ein Abscheidungsmittel, für das Trennen von Chargen-Spaltprodukten von verbrauchten Katalysatorteilchen, einen Regenerator für das Regenerieren und Erhitzen von verbrauchten Katalysatorteilchen und Leitungsmittel umfaßt, um heiße regenerierte Katalysatorteilchen vom Regenerator zum Reaktor zurückzuleiten, wobei der Reaktor ein Mittel für das in Kontakt Bringen des von dem Regenerator zurückgeführten heißen regenerierten Katalysators mit der Kohlenwasserstoffcharge umfaßt, wobei dieses Mittel ein Venturirohr, das einen konvergierenden Eintrittsteil, eine Einschnürung und einen divergenten Austrittsteil hat, ein Einlaßrohr für das Leiten von im wesentlichen der Gesamtheit des heißen regenerierten Katalysators von dem Leitungsmittel in den Eintrittsteil des Venturirohrs zu leiten, mindestens eine Düse für die Abgabe flüssiger Tröpfchen einer Kohlenwasserstoffcharge in die Einschnürung und/oder den Austrittsteil des Venturirohrs, wodurch flüssige Tröpfchen in der Einschnürung und/oder dem Austrittsteil durch Wärmeaustausch mit den heißen regenerierten Katalysatorteilchen von dem Leitungsmittel verdampft werden und dadurch eine Dispersion von Katalysatorteilchen in der verdampften Charge gebildet wird und ein Rohr umfaßt, um diese Dispersion von dem Austrittsteil des Venturirohrs zu einer die Dispersion aufnehmenden und/oder Rückgewinnungszone zu leiten.

7. Vorrichtung nach Anspruch 6, welche eine Desorptionszone für das Desorbieren von desorbierbarem Material von verbrauchtem Katalysator umfaßt, der aus dem Abscheidungsmittel zurückgewonnen worden ist.

8. Vorrichtung nach Anspruch 6 oder 7, bei welcher das Leitungsmittel mit der Regenerationszone für die Aufnahme und die Leitung erhitzter Teilchen davon verbunden ist.

9. Vorrichtung nach irgendeinem der Ansprüche 6 bis 8, bei welcher die Regenerationszone ein Mittel für das in Kontakt Bringen von Teilchen, die von dem Abscheidungsmittel empfangen worden sind, mit einem Sauerstoff enthaltenden Gas umfaßt, um brennbare Ablagerungen von den Teilchen in einer exothermen Reaktion zu entfernen, welche die Teilchen erhitzt.

10. Vorrichtung nach irgendeinem der Ansprüche 6 bis 9, bei welcher das Venturirohr durch eine venturiförmig ausgebildete feuerfeste Masse, wahlweise verstärkt, zwischen dem Einlaßrohr und dem Rohr gebildet wird.

11. Vorrichtung wie in irgendeinem der Ansprüche 6 bis 10, bei welcher die Düse eine Abgabedüse eine eine Kohlenwasserstoffcharge ist, deren Abgabeöffnung in einer gewählten Entfernung von der Einschnürung des Venturirohrs liegt und davon einen Abstand hat, sodaß eine davon abgegebene Kohlenwasserstoffcharge die Form von Öltröpfchen an der Einschnürung und/oder dem Austrittsteil des Venturirohrs hat.

12. Vorrichtung nach irgendeinem der Ansprüche 6 bis 11, wobei die Länge des Rohrs so gewählt wird, daß sich eine Kontaktzeit von Teilchen und Dampf von weniger als 15 Sekunden ergibt.

## Revendications

1. Procédé de craquage catalytique comprenant les étapes consistant à amener une charge d'alimentation en hydrocarbure en contact avec des particules d'un catalyseur de craquage des hydrocarbures dans un réacteur de craquage, dans des conditions de craquage catalytique, récupérer séparément, à partir du réacteur, les produits d'hydrocarbures craqués et le catalyseur épuisé, chauffer et régénérer le catalyseur épuisé et récupéré, et faire circuler le catalyseur chauffé et régénéré en l'amenant en contact avec d'autres quantités de charge d'alimentation, sensiblement la totalité dudit catalyseur régénéré et mis en circulation étant envoyée à l'entrée d'un venturi possédant une partie d'entrée convergente, un col et une partie de sortie divergente, faire passer la charge d'alimentation sous la forme de gouttelettes de liquide dans le col et/ou la partie de sortie du venturi, vaporiser les gouttelettes de liquide de la charge d'alimentation dans le col et/ou dans la partie de sortie sous l'effet d'un échange thermique avec des particules chaudes du catalyseur régénéré, récupérer une dispersion de particules du catalyseur dans une vapeur de la charge d'alimentation dans une canalisation raccordée à la partie de sortie du venturi, et réaliser le craquage catalytique de l'alimentation en phase vapeur dans une zone du venturi et de la canalisation qui n'est pas sensiblement plus en amont (par rapport à la direction ou au sens de l'écoulement de la charge d'alimentation et des particules de catalyseur dans le venturi) qu'au niveau du col du venturi.

2. Procédé selon la revendication 1, comprenant l'étape consistant à réaliser l'extraction de la substance formée par l'hydrocarbure et pouvant être extraite, à partir du catalyseur épuisé récupéré à partir du réacteur.

3. Procédé selon la revendication 1 ou 2, selon lequel des dépôts charbonneux sur des particules du catalyseur épuisé, récupérées à partir du réacteur, sont au moins partiellement éliminés par la mise en contact des particules de catalyseur épuisé récupérées avec un gaz contenant de l'oxygène à une température élevée d'élimination des dépôts dans le régénérateur.

4. Procédé selon l'une quelconque des revendications 1 à 3, dans lequel les particules de catalyseur sont accélérées dans la partie d'entrée du venturi par l'énergie de la charge d'alimentation en hydrocarbure et sont essentiellement mélangées soigneusement avec la vapeur du fluide dans le col et/ou dans la partie de sortie du venturi.

5. Procédé selon l'une quelconque des revendications 1 à 4, selon lequel le venturi et ladite canalisation constituent au moins une partie du réacteur.

6. Unité de craquage catalytique fluidisé (FCCU) comprenant un réacteur, dans lequel une charge d'alimentation en hydrocarbure est mise en contact avec des particules chaudes d'un catalyseur de craquage régénéré dans des conditions de craquage catalytique, des moyens de séparation servant à séparer des produits d'alimentation craqués, de particules du catalyseur épuisé, un régénérateur servant à régénérer et chauffer les particules du catalyseur épuisé et des moyens formant conduit pour renvoyer les particules chaudes du catalyseur régénéré du régénérateur au réacteur, le réacteur comprenant des moyens pour amener le catalyseur chaud régénéré renvoyé du régénérateur en contact avec la charge d'alimentation en hydrocarbure, lesdits moyens comprenant un venturi possédant une partie d'entrée convergente, un col et une partie de sortie divergente, un tube d'entrée pour transférer sensiblement la totalité dudit catalyseur régénéré chaud depuis lesdits moyens formant conduit à la partie d'entrée du venturi, au moins une buse pour refouler les gouttelettes de liquide de la charge d'alimentation en hydrocarbure dans le col et/ou la partie de sortie du venturi, ce qui provoque la vaporisation de gouttelettes de liquide dans le col et/ou la partie de sortie sous l'effet de l'échange thermique avec les particules du catalyseur chaud régénéré provenant des moyens formant conduit, ce qui permet de former une dispersion des particules du catalyseur dans la charge d'alimentation vaporisée, et une canalisation pour envoyer ladite dispersion de la partie de sortie du venturi à une zone de réception et/ou de récupération de la dispersion.

7. Dispositif selon la revendication 6, comprenant une zone d'extraction active pour l'extraction d'une substance formée d'hydrocarbure pouvant être extrait, à partir du catalyseur épuisé récupéré à partir des moyens de séparation.

8. Dispositif selon la revendication 6 ou 7, dans lequel lesdits moyens formant conduit sont raccordés à la zone de régénération pour recevoir et transférer les particules chauffées à partir de cette zone.

9. Dispositif selon l'une quelconque des revendications 6 à 8, dans lequel la zone de régénération comprend des moyens pour placer des particules reçues des moyens de séparation en contact avec un gaz contenant de l'oxygène pour éliminer des dépôts combustibles à partir des particules, dans une réaction d'oxydation exothermique qui chauffe les particules.

10. Dispositif selon l'une quelconque des revendications 6 à 9, dans lequel le venturi est formé par une masse réfractaire en forme de venturi, facultativement renforcée, entre le tube d'entrée et ladite canalisation.

11. Dispositif selon l'une quelconque des revendications 6 à 10, dans lequel ladite buse est une buse de refoulement de la charge d'alimentation en hydrocarbure, dont l'orifice de refoulement est situé à une distance sélectionnée du col du venturi de sorte que la charge d'alimentation en hydrocarbure refoulée à partir du col se présente sous la forme de gouttelettes d'huile au niveau du col et/ou de la partie de sortie du venturi.

12. Dispositif selon l'une quelconque des revendications 6 à 11, dans lequel la longueur de ladite canalisation est choisie de manière à obtenir une durée de contact entre les particules et la vapeur, inférieure à 15 secondes.
